# EUROPEAN PATENT SPECIFICATION

(11) **EP 0 778 410 B1**
(45) Date of publication and mention of the grant of the patent: **22.03.2000**
(21) Application number: 96308876.0
(22) Date of filing: 06.12.1996
(51) Int. Cl.: F02M 43/04, F02M 21/02

(54) **Injection valve arrangement for an internal combustion engine**
Einspritzventilvorrichtung einer Brennkraftmaschine
Dispositif de soupape d'injection pour moteur à combustion interne

(30) Priority: 08.12.1995 FI 955900
(43) Date of publication of application: 11.06.1997
(73) Proprietor: Wärtsilä NSD OY AB, 00530 Helsinki (FI)
(72) Inventor: Nylund, Ingemar, 66580 Kuni (FI)
(74) Representative: Manaton, Ross Timothy

(56) References cited:
- EP-A- 0 237 071
- EP-A- 0 546 985
- GB-A- 2 130 649
- US-A- 4 612 898
- PATENT ABSTRACTS OF JAPAN vol. 012, no. 487 (M-778), 20 December 1988 & JP 63 208664 A (DAIHATSU DIESEL KK), 30 August 1988,

## Description

This invention relates to an injection valve arrangement for an internal combustion engine, especially a large so called gas diesel engine, in accordance with the preamble of claim 1 (see for example US-A-4 612 898).

In this specification the term "large diesel engine" is intended to refer to such an engine that can be used, for example, for the main propulsion engine or an auxiliary engine for a ship or in a power plant for producing electricity and/or heat energy. In a so called gas diesel engine the main fuel to be used is gaseous fuel, which is directly injected into a cylinder of the engine. The gas fuel may be ignited by means of a pilot injection, by feeding into the cylinder a liquid fuel whose ignition temperature is lower than that of the main fuel, whereby ignition can be provided by means of compression ignition.

One problem with fuel injection engines of this type arises from the need to provide even distribution of the fuel in the combustion chamber of each cylinder, so that combustion is as well controlled as possible. This is particularly so when separate valves are used for injection of different fuels. If, in a single injection unit, the same fuel is fed to the corresponding combustion chamber through a number of separate valves, a further problem arises from the need for timing of the injection so that this occurs at exactly the same time through these separate valves. A still further problem is lack of space, because the inlet and outlet passages of the engine cylinder, together with their associated valves, are all located in the cylinder head.

An aim of the invention is to provide an improved injection arrangement for injection of different media, especially different fuels, directly into a cylinder of an engine. A further aim is to provide an injection arrangement especially adapted for gas diesel engines, which is advantageous as far as space requirements are concerned, and which provides exact timing of injection and an improved evenness of distribution of fuel mixture within the combustion chamber of the cylinder, thus allowing better control of combustion.

The invention accordingly provides an injection valve arrangement as set out in the characterizing clause of appended claim 1. Further desirable but non-essential features of the invention are set out in the subsidiary claims.

In accordance with the invention, control of the operation of the gas needle valves is arranged by means of a common control valve preferably under electrical control. In addition the valve needles of the gas needle valves are mechanically connected to each other so that the movements thereof occur concurrently. This arrangement makes it possible to provide a compact unit and to ensure that the feeding of gas through separate gas needle valves occurs concurrently. The arrangement can further be improved by providing the gas needle valves with a common return spring.

In a preferred embodiment of the invention, the arrangement includes a connection piece, which transmits the movements both of the control valve and of the return spring to the valve needles in the gas needle valves.

Each gas needle valve is provided with its own gas feeding chamber, which is located between the connection piece and injection nozzle means of the gas needle valve. The arrangement is such that gas fuel is fed continuously to the gas feeding chamber, thus exerting pressure on the gas needle valve through the connection piece against said return spring.

Opening and closing of the gas needle valves may be achieved by means of hydraulic fluid under the control of the control valve. Hydraulic fluid is fed into a pressure chamber located between the connection piece and the return spring for the gas needle valves. The connection piece is connected to a piston member, which, when acted upon by the pressure of the hydraulic fluid, compresses said return spring, thus tending to open the gas needle valves.

Said hydraulic fluid may also be used for sealing the gas feeding chambers of the gas needle valves, and/or the gas feeding passages arranged in the valve body for feeding gas into said chambers, to the valve body.

The control valve is with advantage a solenoid valve provided with a return spring and arranged to receive an electric control signal from an electronic control unit dependent on the operation of the engine. By this means, precise control of the control valve can be achieved. In addition the control unit can be preprogrammed so that the start and the duration of the fuel feed operation are achieved by taking account of the load and the speed of rotation of the engine in each case.

In a preferred embodiment of the invention which is favourable from the view point of the geometry of the valve arrangement, three gas needle valves are arranged around the pilot needle valve, generally in the form of an equilateral triangle.

The invention is hereinafter described in more detail by way of example only, with reference to the single figure of drawings which consists of a section of a preferred embodiment of valve arrangement.

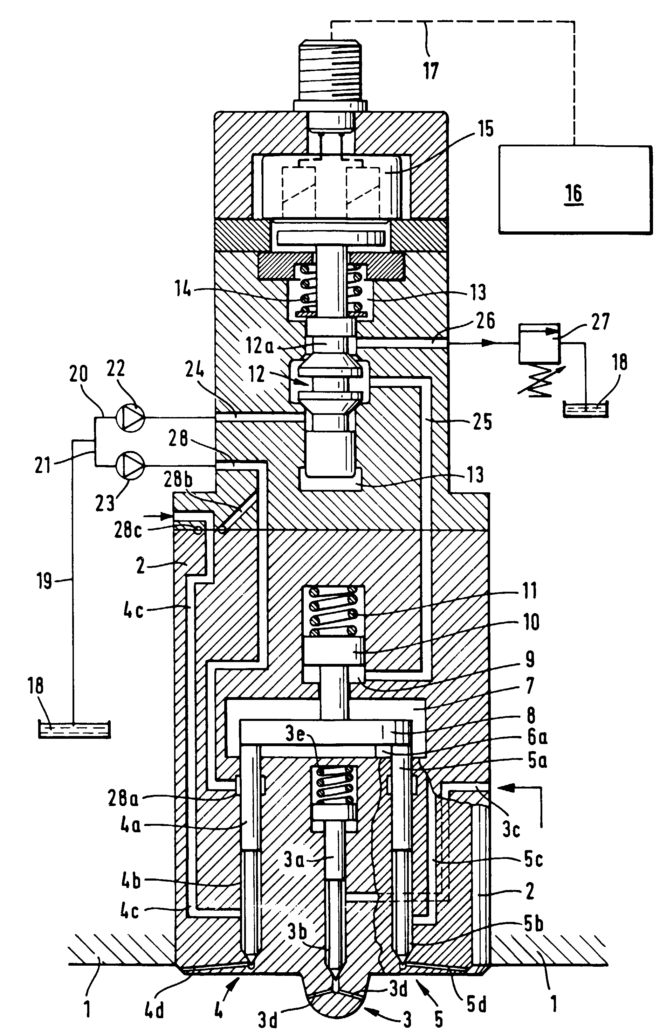

In the drawing 1 indicates a cylinder head of an engine bordering a combustion chamber of an engine cylinder. Supported to the cylinder head 1 there is a valve housing 2, which is provided with a pilot injection valve 3 and with three injection valves (only 4, 5 illustrated) for feeding basic fuel to the burning chamber, the injection valves 4, 5 being arranged around the pilot injection valve 3 in a triangle-like manner. For the sake of simplicity and clarity, only injection valves 4 and 5 are illustrated in their entirety, the greater part of the third valve (designated valve 6) being hidden behind valve 5. References in the following description to valves 4 and 5 apply equally to valve 6, only the valve needle 6a of which is illustrated.

In the case of a gas diesel engine, the injection valves 4, 5 feed gaseous basic fuel into the cylinder, and the mixture is ignited by means of a liquid diesel fuel injected via pilot injection valve 3. Due to lack of space, in practice, the valve members are designed to be rather long and relatively thin, and are therefore referred to as "needles" and the valves as "needle valves".

The pilot valve 3 includes a valve needle 3a and an injection chamber 3b, into which diesel fuel is fed through a feeding passage 3c, for instance by means of a conventional injection pump (not shown). The resulting increased fuel pressure in the injection chamber 3b urges the valve needle 3a to move against a return spring 3e, so that fuel can enter the cylinder through a number of nozzle orifices 3d.

The gas valves 4, 5 include valve needles 4a, 5a and gas feeding chambers 4b, 5b into which gas fuel is continuously fed through feeding passages 4c, 5c. The valves are also provided with one or more nozzle orifices 4d, 5d, through which gas is fed into the cylinder after the valves are opened. The number of nozzle orifices and the feeding angle of the jets are not material to the operation of the invention, and these parameters can be selected in many different ways according to need in each case.

The arrangement also includes a connection piece 8 located in a chamber 7 in the valve housing 2, by means of which the valve needles 4a, 5a are mechanically connected to each other so that they move together. The connection piece 8 is also mechanically connected to a piston member 10, which is located in a separate pressure chamber 9 and can be pressed against a common return spring 11 in order to open the gas valves.

The opening and closing of the gas valves 4, 5 is controlled by means of a control valve 12. The control valve 12 includes a valve member 12a, which is located in a chamber 13, and which can be urged by means of solenoid means 15 against a return spring 14 (i.e. in the upward direction in the figure), in order to open the control valve 12. The arrangement includes an electronic control unit 16, which is dependent on the operation of the engine and gives an electric control signal 17 to the solenoid means 15.

The control valve 12 controls the flow of hydraulic fluid, for instance engine oil, which is pumped by a pump 22 from the oil container 18 of the engine through a pipe 19 and its branch 20 into a passage 24. When the control unit 16 switches on current so as to activate the solenoid means 15, the valve member 12a moves towards the solenoid means 15, and thus compresses the spring 14 so that the hydraulic fluid can flow from the passage 24 through a passage 25 and into the chamber 9. The pressure in the chamber 9 together with the pressure in the gas feeding chambers 4b, 5b of the gas valves then exceeds the force of the return spring 11, and the gas valves 4, 5 are opened and gas is injected into the cylinder.

When the control unit 16 switches off the current from the solenoid means 15, the return spring 14 urges the valve member 12a into the position shown in the figure. As a consequence the connection from the passage 24 to the passage 25 is cut off and the pressure in the chamber 9 is essentially released, since the hydraulic fluid flows through a passage 26 back into the container 18 through pressure adjusting means 27.

Thus, the control unit 16 determines the start and the duration of the feeding of the gas fuel. The control unit 16 can be preprogrammed so that the start and the duration of the feeding of fuel is achieved by taking account of the load and the speed of rotation of the engine in each case.

Feeding the gas into the gas feeding chambers 4b, 5b of the gas needle valves can take place at a pressure of about 250-600 bar (2.5x10⁷ to 6.0x10⁷N.m.⁻²) and the pressure of the hydraulic fluid fed by the pump 22 can be for instance about 300 bar (3.0x10⁷N.m⁻²). The spring force of the spring 11 is selected so that the pressure in the gas feeding chambers 4b, 5b cannot open the gas needle valves when acting on its own, but that the valves open only when the control valve 12 opens the connection between the passages 24 and 25 and the pressure in the chamber 9 is increased correspondingly.

Hydraulic fluid can with advantage be also utilized to seal the valve needles 4a, 5a to the valve housing 2, and thus to prevent the gas fuel from flowing from the gas feeding chambers 4b, 5b in the direction away from the cylinder. For this purpose the oil feeding pipe 19 includes a branch 21 provided with a separate pump 23 for feeding hydraulic fluid through passages 23 into sealing grooves 28a bordering the mantle surface of the valve needles 4a, 5a. Correspondingly, sealing of the gas feeding passages 4c, 5c can also be provided by feeding hydraulic fluid through passages 28b into sealing grooves 28c. The figure shows, by way of example only, the sealing of the valve needle 4a and of the gas feeding passage 4c; the sealing of the other parts can take place in a corresponding way by making use of the same feeding pump 23. For the purpose of sealing, the pressure of the hydraulic fluid must be somewhat higher than the pressure of the gas fuel in the gas feeding chambers 4b, 5b. The pressure can typically be for instance 430 bar (4.3x10⁷N.m⁻²).

Instead of using a hydraulic fluid, the control of the valves 4, 5 can alternatively be achieved by means of a mechanical connection between the valve member 12a and the connection piece 8, transferring the control movements of the control valve 12 through the connection piece 8 to the gas needle valves 4, 5.

The invention is not limited to the embodiment shown, but several modifications are feasible including modifications which have features equivalent to, but not necessarily within the literal meaning of, features in any of the attached claims.

## Claims

1. An injection valve arrangement for an internal combustion engine, especially a large gas diesel engine, the arrangement comprising: an engine cylinder head (1); first valve means (4,5) in the form of at least two needle valves (4,5) for injecting gaseous fuel directly into a cylinder of the engine; and second valve means (3) in the form of a needle valve (3) for injecting pilot fuel into the cylinder in order to enrich the mixture therein for ignition, said gas needle valves (4,5) of said first valve means being arranged around the pilot needle valve (3) **characterized** in that said gas needle valves (4, 5) are arranged in a common valve housing (2) supported to the cylinder head (1), and in that control of the operation of the gas needle valves (4,5) is achieved in operation by means of a common control valve (12) preferably under electrical control, and in that the valve needles (4a,5a) of the gas needle valves (4,5) of the first valve means are mechanically connected to each other so that the movements thereof occur concurrently.

2. An injection valve arrangement according to claim 1, **characterized** in that the gas needle valves (4,5) of the first valve means have a common return spring (11).

3. An injection valve arrangement according to claim 1 or 2, **characterized** in that the arrangement includes a connection piece (8), which transmits the movements of the control valve (12) and the return spring (11) to the valve needles (4a,5a) of the gas needle valves of the first valve means.

4. An injection valve arrangement according to claim 3, **characterized** in that each gas needle valve (4,5) of the first valve means is provided with its own gas feeding chamber (4b,5b), which is located between the connection piece (8) and injection nozzle means (4d,5d) of said gas needle valve (4,5), the arrangement being adapted so that, in operation, gas fuel is fed continuously to each of said gas feeding chambers, thus exerting pressure on said gas needle valves (4,5) through the connection piece (8) against said return spring (11).

5. An injection valve arrangement according any of the preceding claims, **characterized** in that the opening and closing of the gas needle valves (4,5) of the first valve means is achieved in operation by means of hydraulic fluid under the control of the control valve (12).

6. An injection valve arrangement according to claim 5, **characterized** in that it further comprises a pressure chamber (9) into which said hydraulic fluid is fed in operation, said pressure chamber (9) being located between the connection piece (8) and the return spring (11) associated therewith, the connection piece (8) being connected to a piston member (10), which, when acted upon by the pressure of said hydraulic fluid, compresses said return spring (11) for opening the gas needle valves (4,5).

7. An injection valve arrangement according to claim 5 or 6, **characterized** in that said hydraulic fluid is used also for sealing to the valve housing (2) the gas feeding chambers (4b,5b) of the gas needle valves of the first valve means, and/or for sealing to the valve housing (2) gas feeding passages (4c,5c) arranged in the valve housing (2) for feeding gas into said gas feeding chambers (4b,5b).

8. An injection valve arrangement according to any of the preceding claims, **characterized** in that the control valve (12) is a solenoid valve provided with a return spring (14), and adapted to receive an electric control signal (17) from an electronic control unit (16) dependent on the operation of the engine.

9. An injection valve arrangement according to claim 8, **characterized** in that the control unit (16) is preprogrammed so that the start and the duration of the fuel feed operation is achieved by taking account of the load and the speed of rotation of the engine.

10. An injection valve arrangement according to any of the preceding claims, **characterized** in that it comprises three gas needle valves (4,5) arranged around the pilot needle valve (3) generally in the form of an equilateral triangle.

## Patentansprüche

1. Einspritzventilanordnung für eine Brennkraftmaschine, insbesondere eine große Gas-Diesel-Maschine, welche Anordnung umfaßt: einen Maschinenzylinderkopf (1); eine erste Ventilvorrichtung (4, 5) in der Form von mindestens zwei Nadelventilen (4, 5) zum direkten Einspritzen gasförmigen Brennstoffes in einen Zylinder der Maschine; und eine zweite Ventilvorrichtung (3) in der Form eines Nadelventils (3) zum Einspritzen von Pilotbrennstoff in den Zylinder, um die Mischung darin zum Zünden anzureichern, wobei die Gasnadelventile (4, 5) der ersten Ventilvorrichtung um das Pilotnadelventil (3) angeordnet sind,
dadurch gekennzeichnet, dass die Gasnadelventile (4, 5) in einem gemeinsamen Ventilgehäuse (2) angeordnet sind, das auf dem Zylinderkopf (1) gehalten ist, und dass eine Steuerung der Betätigung der Gasnadelventile (4, 5) im Betrieb mit einem gemeinsamen Steuerventil (12), vorzugsweise unter elektrischer Steuerung, erhalten wird, und dass die Ventilnadeln (4a, 5a) der Gasnadelventile (4, 5) der ersten Ventilvorrichtung mechanisch miteinander verbunden sind, so dass deren Bewegungen gleichzeitig auftreten.

2. Einspritzventilanordnung gemäß Anspruch 1,
dadurch gekennzeichnet, dass die Gasnadelventile (4, 5) der ersten Ventilvorrichtung eine gemeinsame Rückstellfeder (11) besitzen.

3. Einspritzventilanordnung gemäß Anspruch 1 oder 2,
dadurch gekennzeichnet, dass die Anordnung ein Verbindungsstück (8) enthält, das die Bewegungen des Steuerventils (12) und der Rückstellfeder (11) auf die Ventilnadeln (4a, 5a) der Gasnadelventile der ersten Ventilvorrichtung überträgt.

4. Einspritzventilanordnung gemäß Anspruch 3,
dadurch gekennzeichnet, dass jedes Gasnadelventil (4, 5) der ersten Ventilvorrichtung mit seiner eigenen Gaszufuhrkammer (4b, 5b) versehen ist, die zwischen dem Verbindungsstück (8) und einer Einspritzdüsenvorrichtung (4d, 5d) des Gasnadelventils (4, 5) angeordnet ist, wobei die Anordnung ausgelegt ist, so dass im Betrieb Gasbrennstoff kontinuierlich in jede der Gaszufuhrkammern geführt wird, wodurch folglich ein Druck auf die Gasnadelventile (4, 5) über das Verbindungsstück (8) gegen die Rückstellfeder (11) ausgeübt wird.

5. Einspritzventilanordnung gemäß einem der vorangehenden Ansprüche,
dadurch gekennzeichnet, dass das Öffnen und Schließen der Gasnadelventile (4, 5) der ersten Ventilvorrichtung im Betrieb mit einem Hydraulikfluid unter der Steuerung des Steuerventils (12) erreicht wird.

6. Einspritzventilanordnung gemäß Anspruch 5,
dadurch gekennzeichnet, dass sie desweiteren eine Druckkammer (9) umfaßt, in die bei Betätigung das Hydraulikfluid geführt wird, wobei die Druckkammer (9) zwischen dem Verbindungsstück (8) und der dazugehörigen Rückstellfeder (11) angeordnet ist, und das Verbindungsstück (8) an ein Kolbenglied (10) angeschlossen ist, das, wenn der Druck des Hydraulikfluids darauf einwirkt, die Rückstellfeder (11) zum Öffnen der Gasnadelventile (4, 5) zusammendrückt.

7. Einspritzventilanordnung gemäß Anspruch 5 oder 6,
dadurch gekennzeichnet, dass das Hydraulikfluid ebenso zum Abdichten der Gaszufuhrkammern (4b, 5b) der Gasnadelventile der ersten Ventilvorrichtung gegenüber dem Ventilgehäuse (2), und/oder zum Abdichten gegenüber dem Ventilgehäuse (2) der Gaszufuhrdurchgänge (4c, 5c) verwendet wird, die in dem Ventilgehäuse (2) zur Zufuhr des Gases in die Gaszufuhrkammern (4b, 5b) angeordnet sind.

8. Einspritzventilanordnung gemäß einem der vorangehenden Ansprüche,
dadurch gekennzeichnet, dass das Steuerventil (12) ein Magnetventil ist, das mit einer Rückstellfeder (14) versehen ist und bestimmt ist, in Abhängigkeit des Betriebszustandes der Maschine ein elektrisches Steuersignal (17) von einer elektronischen Steuereinheit (16) zu erhalten.

9. Einspritzventilanordnung gemäß Anspruch 8,
dadurch gekennzeichnet, dass die Steuereinheit (16) vorprogrammiert ist, so dass der Beginn und die Dauer des Brennstoffzufuhrvorgangs erhalten wird, indem die Belastung und die Drehzahl der Maschine mit einbezogen werden.

10. Einspritzventilanordnung gemäß einem der vorangehenden Ansprüche,
dadurch gekennzeichnet, dass sie drei Gasnadelventile (4, 5) umfaßt, die um das Pilotnadelventil (3), im Allgemeinen in der Form eines gleichseitigen Dreiecks, angeordnet sind.

## Revendications

1. Système de soupape d'injection pour un moteur à combustion interne, en particulier un gros moteur diesel à gaz, ce système comprenant: une culasse de cylindre (1) du moteur; un premier moyen de soupape (4, 5) sous forme d'au moins deux soupapes à pointeaux (4, 5) pour injecter du carburant gazeux directement dans un cylindre du moteur; et un deuxième moyen de soupape (3) sous forme d'une soupape à pointeau (3), pour injecter du carburant pilote dans le cylindre afin d'enrichir le mélange s'y trouvant en vue de son allumage, lesdites soupapes à pointeaux à gaz (4, 5) dudit premier moyen de soupape étant arrangées autour de la soupape à pointeau pilote (3), caractérisé en ce que lesdites soupapes à pointeaux à gaz (4, 5) sont arrangées dans un logement de soupape commun (2) supporté sur la culasse de cylindre (1) et en ce que la commande du fonctionnement des soupapes à pointeaux à gaz (4, 5) est réalisée en fonctionnement au moyen d'une soupape de régulation commune (12) de préférence commandée électriquement, et en ce que les pointeaux de soupapes (4a, 5a) des soupapes à pointeaux à gaz (4, 5) du premier moyen de soupape sont connectés mécaniquement l'un à l'autre de sorte que leurs mouvements se produisent simultanément.

2. Système de soupape d'injection selon la revendication 1, caractérisé en ce que les soupapes à pointeaux à gaz (4, 5) du premier moyen de soupape ont un ressort de rappel commun (11).

3. Système de soupape d'injection selon la revendication 1 ou 2, caractérisé en ce que le système comporte une pièce de connexion (8) qui transmet les mouvements de la soupape de régulation (12) et du ressort de rappel (11) aux pointeaux de soupape (4a, 5a) des soupapes à pointeaux à gaz du premier moyen de soupape.

4. Système de soupape d'injection selon la revendication 3, caractérisé en ce que chaque soupape à pointeau à gaz (4, 5) du premier moyen de soupape est pourvue de sa propre chambre d'alimentation de gaz (4b, 5b), qui est située entre la pièce de connexion (8) et le moyen de buse d'injection (4d, 5d) de ladite soupape à pointeau à gaz (4, 5), le système étant adapté de telle sorte qu'en fonctionnement, du carburant gazeux soit alimenté en continu à chacune desdites chambres d'alimentation de gaz, en exerçant ainsi une pression sur lesdites soupapes à pointeaux à gaz (4, 5), par l'intermédiaire de la pièce de connexion (8) contre ledit ressort de rappel (11).

5. Système de soupape d'injection selon l'une quelconque des revendications précédentes, caractérisé en ce que l'ouverture et la fermeture des soupapes à pointeaux à gaz (4, 5) du premier moyen de soupape sont obtenues en fonctionnement au moyen de fluide hydraulique sous la commande de la soupape de régulation (12).

6. Système de soupape d'injection selon la revendication 5, caractérisé en ce qu'il comprend en outre une chambre de pression (9) dans laquelle ledit fluide hydraulique est alimenté en fonctionnement, ladite chambre de pression (9) étant située entre la pièce de connexion (8) et le ressort de rappel (11) qui lui est associé, la pièce de connexion (8) étant connectée à un organe de piston (10), qui, lorsqu'il est sollicité par la pression dudit fluide hydraulique, comprime ledit ressort de rappel (11) pour ouvrir les soupapes à pointeaux à gaz (4, 5).

7. Système de soupape d'injection selon la revendication 5 ou 6, caractérisé en ce que ledit fluide hydraulique est utilisé également pour sceller au logement de soupape (2) les chambres d'alimentation de gaz (4b, 5b) des soupapes à pointeaux à gaz du premier moyen de soupape, et/ou pour sceller au logement de soupape (2) des passages d'alimentation de gaz (4c, 5c) disposés dans le logement de soupape (2) pour alimenter du gaz dans lesdites chambres d'alimentation de gaz (4b, 5b).

8. Système de soupape d'injection selon l'une quelconque des revendications précédentes, caractérisé en ce que la soupape de régulation (12) est une électrovanne pourvue d'un ressort de rappel (14), et qui est adaptée pour recevoir un signal de commande électrique (17) depuis une unité de commande électronique (16) dépendant du fonctionnement du moteur.

9. Système de soupape d'injection selon la revendication 8, caractérisé en ce que l'unité de commande (16) est préprogrammée de sorte que le début et la durée de l'opération d'alimentation de carburant soient réalisés en tenant compte de la charge et de la vitesse de rotation du moteur.

10. Système de soupape d'injection selon l'une quelconque des revendications précédentes, caractérisé en ce qu'il comprend trois soupapes à pointeaux à gaz (4, 5) arrangées autour de la soupape à pointeau pilote (3) généralement sous la forme d'un triangle équilatéral.
